# EUROPÄISCHE PATENTSCHRIFT

(11) **EP 0 839 600 B1**
(45) Veröffentlichungstag und Bekanntmachung des Hinweises auf die Patenterteilung: **20.10.1999**
(21) Anmeldenummer: 97113491.1
(22) Anmeldetag: 05.08.1997
(51) Int. Cl.: B23Q 7/04

(54) **Werkzeugmaschine**
Machine tool
Machine-outil

(30) Priorität: 04.10.1996 DE 19640918; 11.04.1997 DE 19715000
(43) Veröffentlichungstag der Anmeldung: 06.05.1998
(73) Patentinhaber: ILG GmbH, 71554 Weissach i.T. (DE)
(72) Erfinder: Ilg, Herbert, 71554 Weissach i.T. (DE)
(74) Vertreter: Manitz, Finsterwald & Partner

(56) Entgegenhaltungen:
- WO-A-94/22639
- DE-A- 3 127 130
- US-A- 3 918 331
- PATENT ABSTRACTS OF JAPAN vol. 012, no. 419 (M-760), 8.November 1988 & JP 63 156601 A (MATSUO SANGYO KK), 29.Juni 1988,

## Beschreibung

Die vorliegende Erfindung betrifft eine Werkzeugmaschine, insbesondere zur Drehbearbeitung von Werkstücken, mit einer einen Werkzeughalter für Bearbeitungswerkzeuge umfassenden Bearbeitungsstation, einem Spindelstock mit horizontaler Arbeitsspindel zur Rotation eines daran gehaltenen Werkstückes und einem der Arbeitsspindel gegenüberliegenden Reitstock zur zusätzlichen Abstützung des im Spindelstock gehaltenen Werkstückes.

Eine derartige Drehbarbeitungsmaschine mit horizontaler Spindelachse, die zur Bearbeitung von Wellen eingesetzt wird, ist beispielsweise aus der DE-A-31 27 130 bekannt. Die Wellen oder andere Werkstücke werden dabei von einer Transportvorrichtung angeliefert und müssen der Bearbeitungsstation zugeführt werden. Dies erfolgt bei der bekannten Werkzeugmaschine mittels eines Portalladers, der die Werkstücke von einer Werkstückaufnahmeposition aufnimmt und zur Bearbeitungsstation transportiert. In der Bearbeitungsstation werden die Werkstücke zwischen Spindelstock und Reitstock eingespannt. Nach Zurückfahren des Portalladers können die so zugeführten und festgelegten Werkstücke bearbeitet werden. In entsprechender Weise werden die Werkstücke nach der Bearbeitung mittels des Portalladers zu einer Werkstückablageposition gebracht und dann abtransportiert.

Die Verwendung von Portalladern für die Zu- und Abfuhr von Werkstücken zur Bearbeitungsstation funktioniert zwar in der Praxis problemlos. Das Vorsehen von Portalladern ist jedoch kostenaufwendig und platzbeanspruchend.

Die US-A-3 918 331 beschreibt eine Werkzeugmaschine mit Spindelstock mit horizontaler Spindelachse. Ein Reitstock ist bei dieser Werkzeugmaschine nicht vorhanden. Der Spindelstock ist nach Bearbeitung eines Werkstückes in eine Position verfahrbar, in welcher das Werkstuck einfach manuell oder mechanisch entnommen werden kann. Eine automatische Beschickung der Werkzeugmaschine ohne zusätzliche Transportvorrichtung ist mit dieser Werkzeugmaschine daher nicht möglich.

Der Erfindung liegt daher die Aufgabe zugrunde, eine Werkzeugmaschine der eingangs genannten Art anzugeben, welche diese Nachteile nicht aufweist. Insbesondere soll die Zu- und gegebenenfalls Abfuhr von Werkstücken zur Bearbeitungsstation kostengünstig und platzsparend gelöst werden.

Diese Aufgabe wird dadurch gelöst, daß der Spindelstock und der Reitstock zwischen der Bearbeitungsstation und einer Werkstuckaufnahmeposition verfahrbar ausgebildet sind, und daß der Spindelstock und der Reitstock als eine Einheit auf Schlitten angeordnet sind, die auf Führungsschienen in zumindest zwei, insbesondere zueinander senkrechten, Richtungen verschiebbar sind.

Durch die gemeinsam verfahrbare Ausgestaltung des Spindelstockes und des Reitstockes in zwei insbesondere zueinander senkrechten Richtungen können die Werkstücke von einer Werkstückaufnahmeposition von dem Spindelstock selbst aufgenommen und zur Bearbeitungsstation transportiert werden. Das Erfordernis einer separaten Transportvorrichtung, insbesondere eines Portalladers, entfällt dadurch. Die Verwendung des Spindelstockes mit Reitstock zum Transport der Werkstücke ist kostengünstig realisierbar und führt gegenüber Portalladern zu einem verringerten Platzbedarf.

In den meisten Anwendungsfällen reicht es aus, den Spindelstock und den Reitstock horizontal und vertikal verfahrbar auszugestalten. Damit kann das Werkstück nicht nur problemlos der Bearbeitungsstation zugeführt werden, sondern die Verfahrbarkeit des Spindelstockes und des Reitstockes gewährleistet auch den bei der Bearbeitung des Werkstückes erforderlichen Vorschub des Werkstuckes gegenüber dem Werkzeug. Auf Führungsschienen verfahrbare Schlitten sind konstruktiv unaufwendig und ermöglichen eine genaue Festlegung des Verfahrweges.

Nach einer bevorzugten Ausgestaltung der Erfindung sind der Spindelstock und der Reitstock nicht nur zwischen einer Werkstückaufnahmeposition und der Bearbeitungsstation, sondern zusätzlich auch zwischen der Bearbeitungsstation und einer Werkstückablageposition verfahrbar. Damit ist gewährleistet, daß der gesamte notwendige Werkstücktransport zur und von der Werkzeugmaschine durch Verfahren des Spindelstockes mit Reitstock erfolgen kann. Zwischen Werkstückaufnahmeposition und Werkstückablageposition ist also keine sonstige Transportvorrichtung erforderlich. Damit reicht es aus, die Werkstücke der Werkzeugmaschine über einfache Transportvorrichtungen wie Transportbänder zuzuführen und entsprechend wieder abzutransportieren.

Bevorzugt wird die Verfahrstrecke des Spindelstockes und des Reitstockes numerisch gesteuert. Hierdurch wird eine sehr hohe Positioniergenauigkeit erreicht, so daß sonstige Positionierhilfsmittel entfallen können. Es genügt, wenn die insbesondere getaktet zugeführten Werkstücke in der Werkstückaufnahmeposition ausreichend genau positioniert sind, da diese Position dann stets exakt vom Spindelstock angefahren werden kann, um das Werkstück aufzunehmen. Entsprechendes gilt für die Abfuhr des Werkstückes.

Nach einer weiteren Ausgestaltung der Erfindung ist der Werkzeughalter unterhalb der Bearbeitungsstation der Werkstücke angeordnet und erfolgt die Zufuhr von Werkstücken von oberhalb der Bearbeitungsstation her. Bei der Bearbeitung anfallender Schmutz wie beispielsweise Späne kann somit nicht in das Werkstück gelangen. Außerdem ist die Zufuhr von Werkstücken in die bzw. von der Bearbeitungsstation ungehindert möglich.

Nach einer weiteren Ausgestaltung der Erfindung sind an dem Maschinengestell zwei Bearbeitungsstationen angeordnet, denen jeweils ein Werkstück zur Bearbeitung zugeführt wird, wobei die Bearbeitungsstationen jeweils einen an dem Maschinengestell gehaltenen Werkzeughalter und eine dem Werkzeughalter zugeordnete, an ihrem einen axialen Ende ein Spannfutter zum Halten eines Werkstückes aufweisende Arbeitsspindel umfassen, wobei ferner die Arbeitsspindel der ersten Bearbeitungsstation an einer ersten Führungsschiene und die Arbeitsspindel der zweiten Bearbeitungsstation an einer parallel zu der ersten Führungsschiene liegenden zweiten Führungsschiene angeordnet ist, und wobei die Arbeitsspindeln auf voneinander abgewandten Seiten der jeweiligen Führungsschiene angeordnet sind.

Durch die Anordnung der Arbeitsspindeln auf voneinander abgewandten Seiten der jeweiligen Führungsschiene ist eine gegenseitige Beeinträchtigung, insbesondere Verschmutzung der beiden Arbeitsspindeln nahezu ausgeschlossen. Ein weiterer Vorteil liegt darin, daß die Werkzeughalter unabhängig voneinander gestaltet werden können, so daß diese die unterschiedlichsten Bearbeitungseinheiten aufnehmen können, wie beispielsweise Adapterplatten mit Blockwerkzeugen (Linearrevolver), die außerhalb voreinstell- und schnellwechselbar sind, Revolverköpfe mit oder ohne angetriebene Werkzeuge zum Drehen, Bohren, Reiben, Gewindebohren, Fräsen usw. sowie Schlagwälz-Fräseinheiten für Verzahnarbeiten.

Einer oder beiden Arbeitsspindeln ist bevorzugt ein dem Spannfutter gegenüberliegender Reitstock zugeordnet. Eine solche Anordnung ermöglicht die Bearbeitung von Drehteilen. Die von der Arbeitsspindel aufgenommenen und mittels des Reitstocks eingespannten Werkstücke werden mittels eines bevorzugt unterhalb der Arbeitsspindel und dem Reitstock angeordneten Werkzeugs bearbeitet. Dies bedeutet, daß sich die Spindelachse dieser Arbeitsspindel horizontal erstreckt. Mit dieser Anordnung können in besonders geschickter Weise beispielsweise Wellen gedreht werden.

Bei einer sonstigen Bearbeitung wie Drehen, Bohren, Gewindefräsen erstreckt sich die Spindelachse der Arbeitsspindel dagegen bevorzugt vertikal, wobei auch hier das Werkzeug unterhalb der Arbeitsspindel, der in diesem Fall kein Reitstock zugeordnet ist, angeordnet ist.

Auf einer erfindungsgemäßen Werkzeugmaschine können also beide Arten von Arbeitsspindeln miteinander kombiniert sein, das heißt, eine Bearbeitungsstation kann eine Arbeitsspindel mit zugeordnetem Reitstock und horizontaler Spindelachse, die andere Bearbeitungsstation eine Arbeitsspindel ohne Reitstock und mit vertikaler Spindelachse umfassen. Die erfindungsgemäße Werkzeugmaschine kann aber auch in beiden Bearbeitungsstationen mit gleichen Arbeitsspindeln ausgerüstet sein.

Grundsätzlich gibt es eine Reihe von Möglichkeiten, die an den beiden Führungsschienen vorgesehenen Bearbeitungsstationen miteinander zu verketten.

Gemäß einer bevorzugten Ausführungsform liegen jedoch die Werkstückaufnahmepositionen und die Werkstückablegepositionen der Arbeitsspindeln jeweils auf entgegengesetzten Seiten des zugehörigen Werkzeughalters, wobei vorzugsweise die Werkstückablegestelle einer Arbeitsspindel jeweils der Werkstückaufnahmestelle der anderen Arbeitsspindel gegenüberliegt, so daß ein Werkstück an den beiden Führungsschienen in entgegengesetzten Richtungen von der Werkstückaufnahmeposition in die Werkstückabgabestellung verfahren wird.

Diese Anordnung hat den Vorteil, daß jeweils während der Bearbeitung bereits ein neues Werkstück an die Werkstückaufnahmeposition transportiert werden kann.

Durch die Transportvorrichtung zwischen den beiden Bearbeitungsstationen können die bearbeiteten Werkstücke vorteilhafterweise innerhalb der Maschine von der ersten Bearbeitungsstation zur zweiten Bearbeitungsstation transportiert werden. Man hat damit die Möglichkeit, an einem Werkstück nacheinander zwei unabhängige Bearbeitungsoperationen, wie z.B. Drehen, Bohren, Gewindefräsen, vorzunehmen. Ein zusätzlicher Be- und Entladevorgang entfällt und die Baugröße der Maschine wird gering gehalten.

Die erfindungsgemäße Werkzeugmaschine gibt damit die Möglichkeit, hinsichtlich der Bearbeitung jeweils unabhängig voneinander ein Werkstück in zwei Aufspannungen oder zwei gleiche Werkstücke parallel in je einer Aufspannung oder zwei verschiedene Werkstücke gleichzeitig in je einer Aufspannung vollautomatisch zu bearbeiten.

Falls erforderlich, kann wenigstens einer Bearbeitungsstation eine Prüfeinrichtung zur Überprüfung der Maß- und/oder Formgenauigkeit eines von der Bearbeitungsstation bearbeiteten Werkstückteils zugeordnet sein, wobei die Prüfeinrichtung dann derart mit einer Steuerung für die Arbeitsspindel gekoppelt ist, daß innerhalb eines vorgebbaren Toleranzbereiches liegende Werkstücke - Gutteile - in einer Werkstückablegeposition und außerhalb des Toleranzbereiches liegende Werkstücke - Ausschußteile - an einer anderen Werkstückablegeposition ablegt und vorzugsweise durch Fördervorrichtungen wegtransportiert werden.

Diese Ausgestaltung ermöglicht eine Prüfung der Werkstücke und eine Trennung der Gutteile von den Ausschußteilen direkt an der Werkzeugmaschine.

Die erfindungsgemäße Werkzeugmaschine ist gegenüber bekannten, mit Portalladern arbeitenden Maschinen auch deutlich günstiger in der Herstellung. Bearbeitung und Transport der Werkstücke mit einer Bearbeitung an zwei Bearbeitungsstationen kann vollständig innerhalb der Maschine erfolgen. Ein Portallader kann daher entfallen. Stattdessen werden die Werkstücke von der Maschine selbst von einem Zuführband entnommen und nach Bearbeitung an ein Abführband abgegeben.

Die kombinierte Ausführung der erfindungsgemäßen Werkzeugmaschine ermöglicht darüber hinaus eine sehr geschickte Bearbeitung von Werkstücken, die sowohl drehbearbeitet als auch gebohrt, gefräst oder in ähnlicher Weise bearbeitet werden müssen. So können beispielsweise Wellen hergestellt werden, die auf einer Seite mit einer Flanschpartie versehen sind, ohne das Werkstück von einer Werkzeugmaschine zu einer anderen transportieren zu müssen.

Weitere vorteilhafte Ausgestaltungen der Erfindung ergeben sich aus der nachfolgenden Beschreibung eines Ausführungsbeispiels, den Unteransprüchen und der Zeichnung.

Ausführungsbeispiele der Erfindung sind in der Zeichnung dargestellt und werden nachfolgend beschrieben. In schematischer Darstellung zeigt
- Figur 1: eine Seitenansicht eines Ausschnitts aus einer erfindungsgemäßen Werkzeugmaschine, und
- Figur 2: eine Draufsicht auf eine erfindungsgemäße Werkzeugmaschine mit zwei Arbeitsspindeln.

Der dargestellte Ausschnitt einer erfindungsgemäßen Werkzeugmaschine umfaßt einen ersten Schlitten 1, der an seiner Unterseite einen Spindelstock 2 und gegenüberliegend einen Reitstock 3 trägt. Der Spindelstock 2 umfaßt eine horizontal ausgerichtete Arbeitsspindel 4, die über eine Antriebseinrichtung 5 um ihre Längsachse I rotierbar ist. An ihrem freien Ende ist die Arbeitsspindel 4 mit einer Aufnahme 6 für ein Werkstück 7 versehen. Durch Aufeinanderzufahren von Spindelstock 2 und Reitstock 3 wird ein an der Arbeitsspindel 4 gehaltenes Werkstück 7 für eine Bearbeitung sicher festgelegt, indem der Reitstock 3 das Werkstück 7 zusätzlich abstützt.

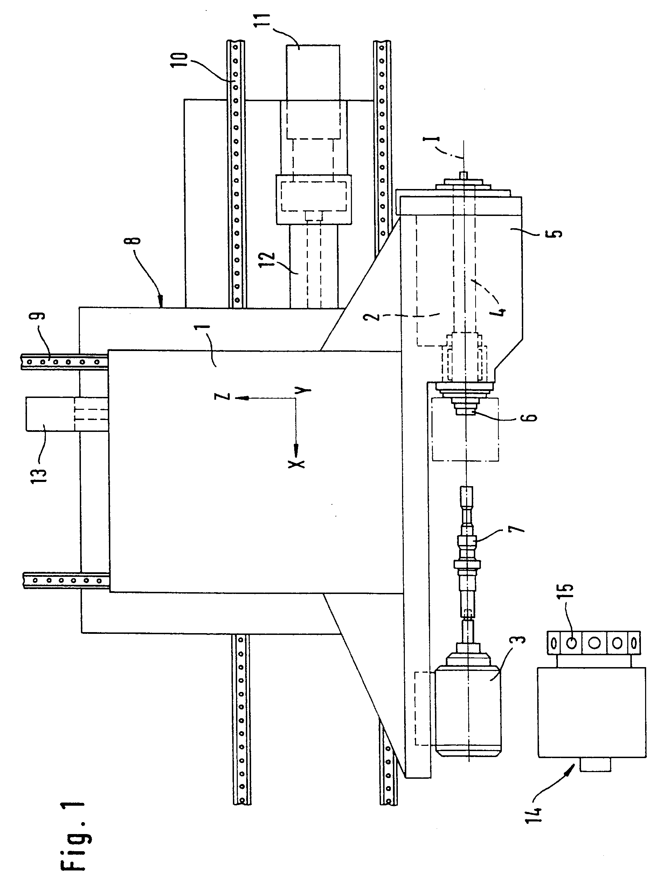

Der erste Schlitten 1 ist auf einem zweiten Schlitten 8 längs vertikaler Führungsschienen 9 gemäß Pfeil Z verfahrbar angeordnet, welcher seinerseits längs Führungsschienen 10 horizontal gemäß Pfeil X verfahrbar ist. Hierfür sind nur teilweise dargestellte Antriebseinrichtungen 11, 12 und 13 vorgesehen. In der in Figur 1 dargestellten Arbeitsposition unterhalb von Spindelstock 2 und Reitstock 3 ist ein Werkzeughalter 14 angeordnet, welcher insbesondere als Trommelwerkzeughalter ausgebildet ist und verschiedene zur Bearbeitung notwendige, nur angedeutete Werkzeuge 15 trägt, die wahlweise zum Einsatz gebracht werden können.

Zur Bearbeitung eines Werkstückes 7, insbesondere einer Welle, werden Spindelstock 2 und Reitstock 3 mittels der Schlitten 1, 8 längs der Führungsschienen 9, 10 zu einer hier nicht dargestellten Werkstückaufnahmeposition verfahren, wobei die Verfahrstrecke numerisch gesteuert ist. Die Zufuhr des Werkstückes 7 zur Werkstückaufnahmeposition erfolgt beispielsweise über ein Transportband mit Prismenauflage, auf welchem die Werkstücke 7, insbesondere Wellen, in geschickter Weise herangeführt und gelagert werden können. An der Werkstückaufnahmeposition wird der erste Schlitten 1 abgesenkt, so daß Spindelstock 2 und Reitstock 3 neben dem Werkstück 7 derart positioniert sind, daß dieses von der Aufnahme 6 der Arbeitsspindel 4 aufgenommen und eingespannt werden kann. Bereits jetzt oder auch später werden Spindelstock 2 und Reitstock 3 gegeneinander gefahren, so daß das von der Arbeitsspindel 4 gehaltene Werkstück 7 zusätzlich abgestützt ist.

Nach der Aufnahme eines Werkstückes 7 werden Spindelstock 2 und Reitstock 3 zur Bearbeitungsposition oberhalb des Werkzeughalters 14 verfahren. Nun wird der erste Schlitten 1 so weit abgesenkt, daß das Werkstück 7 mit dem jeweils ausgewählten Werkzeug 15 bearbeitet werden kann. Hierfür wird die Arbeitsspindel 4 mittels des Antriebs 5 in Rotation versetzt und das Werkstück 7 durch Verfahren des ersten Schlittens 1 mit dem Werkzeug 7 in Eingriff gebracht.

Nach beendeter Bearbeitung des Werkstücks 7 wird das Werkstück zu einer Werkstückablageposition transportiert, indem Spindelstock 2 und Reitstock 3 wiederum mittels der Schlitten 1, 8 längs der Schienen 9 und 10 verfahren werden. Die Werkstückablageposition kann dabei an einem anderen Ort vorgesehen sein als die Werkstückaufnahmeposition, insbesondere auf der der Werkstückaufnahmeposition abgewandten Seite der Arbeitsstation. Nach Ablegen des bearbeiteten Werkstückes 7 in der Werkstückablageposition ist die Werkzeugmaschine bereit zur Aufnahme eines neuen zu bearbeitenden Werkstückes 7. Dieses wird in derselben Weise wieder aufgenommen und zur Bearbeitungsstation transportiert wie zuvor beschrieben.

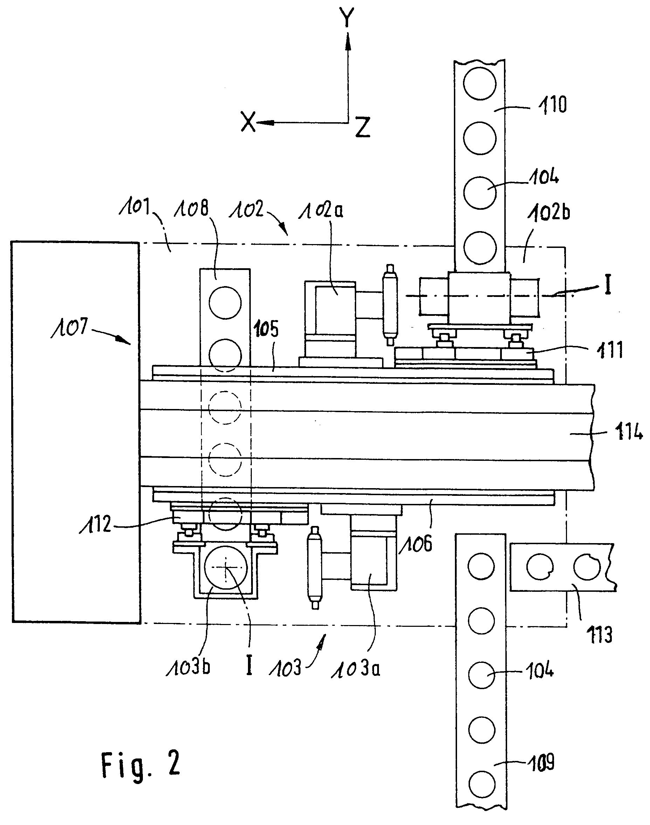

Zu der in Fig. 2 dargestellten Werkzeugmaschine gehören zwei Bearbeitungsstationen 102, 103, die auf voneinander abgewandten Seiten eines Maschinengestells 101 angeordnet sind und jeweils einen stationären Werkzeughalter 102a, 103a sowie eine Arbeitsspindel 102b, 103b mit horizontaler bzw. vertikaler Drehachse I aufweisen.

Die Arbeitsspindeln 102b, 103b der Bearbeitungsstationen 102, 103 sind in vertikaler Richtung Z verstellbar an Schlitten 111, 112 gehalten, die wiederum an Führungsschienen 105, 106 verfahrbar sind, welche in horizontaler Richtung X verlaufend auf voneinander abgewandten Seiten des Maschinengestells 101 angeordnet sind.

Die Arbeitsspindeln 102b, 103b können jeweils zwischen einer Arbeitsstellung, in der die Arbeitsspindel 102b, 103b oberhalb des jeweils zugehörigen Werkzeughalters 102a, 103a positioniert ist, einer Werkstückaufnahmeposition und einer Werkstückablegeposition verfahren werden, wobei die Werkstückaufnahmeposition und die Werkstückablegeposition auf entgegengesetzten Seiten des Werkzeughalters 102a, 103a liegen.

Die Werkstückaufnahmeposition der ersten Bearbeitungsstation 102 liegt oberhalb eines Zuführbandes 110, auf dem die zu bearbeitenden Rohlinge, beispielsweise in einer Prismenaufnahme gelagerte Drehteile, zugeführt werden, und die Werkstückablegeposition liegt oberhalb eines Transportbandes 108, das sich in horizontaler Richtung quer zwischen den Führungsschienen 105, 106 und unterhalb der Arbeitsspindeln 102b, 103b der Bearbeitungsstationen 102, 103 erstreckt, so daß ein Werkstück 104 allein durch eine Hubbewegung der Arbeitsspindel 102b auf dem Transportband 108 abgelegt und von der Arbeitsspindel 103b der zweiten Bearbeitungsstation 103 in ihrer Werkstückaufnahmeposition gegriffen werden kann.

Die Arbeitsspindel 103b ist in ihrer Werkstückablegeposition oberhalb eines Abführbandes 109 positioniert, auf dem die bearbeiteten Werkstücke abtransportiert werden.

Im Betrieb wird der Werkzeugmaschine ein zu bearbeitendes Werkstück 104 auf dem Zuführband 110 zugeführt und von dem Spannfutter der oberhalb des Zuführbandes 110 positionierten Arbeitsspindel 102b der ersten Bearbeitungsstation 102 gegriffen. Anschließend wird die Arbeitsspindel 102b entlang der Führungsschiene 105 der ersten Bearbeitungsstation 102 in ihre Arbeitsstellung verfahren, wo das Werkstück 103 durch die am Werkstückträger 102a angeordneten Werkzeuge bearbeitet wird.

Nach der Bearbeitung wird die Arbeitsspindel 102b oberhalb des Transportbandes 108 positioniert und das Werkstück 104 auf dem Transportband 108 abgelegt, welches das Werkstück 104 der zweiten Bearbeitungsstation 103 zuführt.

Während des Transports kann das Werkstück 104 durch eine Werkstückwendeeinrichtung um bspw. 90° oder 180° gewendet werden, um erforderlichenfalls in eine Position gebracht zu werden, in der es von dem Spannfutter der oberhalb des Transportbandes 108 positionierten Arbeitsspindel 103b der zweiten Bearbeitungsstation 103 zur Bearbeitung ergriffen werden kann.

Das fertiggestellte Werkstück wird durch eine Prüfeinrichtung auf Maß- und/oder Formgenauigkeit geprüft, die mit der Steuerung der Werkzeugmaschine gekoppelt ist. Wenn die Abmessungen und die Form des Werkstücks 104 in einem vorgebbaren Toleranzbereich liegen, wird das Werkstück 104 auf dem Abführband 109 abgelegt. Anderenfalls wird das Werkstück auf einem Ausschußteiltransportband 113 abgelegt.

Bei den zuvor erläuterten Ausführungsformen der erfindungsgemäßen Werkzeugmaschine werden die bei der Bearbeitung der Werkstücke anfallenden Späne durch eine zwischen und unterhalb von den Führungsschienen 105, 106 angeordnete Spantransportvorrichtung 114 abgeführt.

Wenn mit der erfindungsgemäßen Werkzeugmaschine Verzahnungen hergestellt werden sollen, kann vorzugsweise die zweite Bearbeitungsstation mit einer Schlagwälz-Fräseinheit zum Verzahnen von Werkstücken sowie zwei Frässpindeln zum Entgraten der Verzahnungen versehen sein, während die erste Bearbeitungsstation beispielsweise als Dreheinheit ausgebildet ist.

Man erhält eine kostengünstig herstellbare Werkzeugmaschine, die zudem einen geringen Platzbedarf aufweist. Der notwendige Transport der Werkstücke 7 im Bereich der Werkzeugmaschine kann vorteilhafterweise ausschließlich durch Verfahren der Schlitten 1, 8 erfolgen. Zusätzliche Transportvorrichtungen im Bereich der Maschine sind daher nicht erforderlich, insbesondere keine kosten- und platzaufwendigen Portallader.

### Bezugszeichenliste

- 1: Erster Schlitten
- 2: Spindelstock
- 3: Reitstock
- 4: Arbeitsspindel
- 5: Antrieb
- 6: Aufnahme
- 7: Werkstück
- 8: Zweiter Schlitten
- 9: Führungsschiene
- 10: Führungsschiene
- 11: Antriebseinrichtung
- 12: Antriebseinrichtung
- 13: Antriebseinrichtung
- 14: Werkzeughalter
- 15: Werkzeug
- 101: Maschinengestell
- 102: Bearbeitungsstation
- 102a: Werkzeughalter
- 102b: Arbeitsspindel
- 103: Bearbeitungsstation
- 103a: Werkzeughalter
- 103b: Arbeitsspindel
- 104: Werkstück
- 105: Führungsschiene
- 106: Führungsschiene
- 107: Transportvorrichtung
- 108: Transportband
- 109: Abführband
- 110: Zuführband
- 111: Schlitten
- 112: Schlitten
- 113: Ausschußteiltransportband
- 114: Spantransportvorrichtung
- X: Horizontalrichtung
- Y: Horizontalrichtung
- Z: Vertikalrichtung
- I: Spindelachse

## Patentansprüche

1. Werkzeugmaschine, insbesondere zur Drehbearbeitung von Werkstücken (7), mit einer einen Werkzeughalter (14) für Bearbeitungswerkzeuge (15) umfassenden Bearbeitungsstation, einem Spindelstock (2) mit horizontaler Arbeitsspindel (4) zur Rotation eines daran gehaltenen Werkstückes (7) und einem der Arbeitsspindel (4) gegenüberliegenden Reitstock (3) zur zusätzlichen Abstützung des im Spindelstock (2) gehaltenen Werkstückes (7),
**dadurch gekennzeichnet**,
daß der Spindelstock (2) und der Reitstock (3) zwischen der Bearbeitungsstation und einer Werkstückaufnahmeposition verfahrbar ausgebildet sind und daß der Spindelstock (2) und der Reitstock (3) als eine Einheit auf Schlitten (1, 8) angeordnet sind, die auf Führungsschienen (9, 10) in zumindest zwei, insbesondere zueinander senkrechten, Richtungen (X, Z) verschiebbar sind.

2. Werkzeugmaschinen nach Anspruch 1,
**dadurch gekennzeichnet**,
daß der Spindelstock (2) und der Reitstock (3) zusätzlich zwischen der Bearbeitungsstation und einer Werkstückablageposition verfahrbar sind.

3. Werkzeugmaschine nach einem der vorhergehenden Ansprüche,
**dadurch gekennzeichnet**,
daß die Verfahrstrecke des Spindelstockes (2) und des Reitstockes (3) numerisch gesteuert ist.

4. Werkzeugmaschine nach einem der vorhergehenden Ansprüche,
**dadurch gekennzeichnet**,
daß eine Transportvorrichtung zum Anliefern von Werkstücken (7) zur Werkstückaufnahmeposition vorgesehen ist und daß die Zufuhr von Werkstücken (7) zur Werkstückaufnahmeposition getaktet erfolgt.

5. Werkzeugmaschine nach einem der vorgehenden Ansprüche,
**dadurch gekennzeichnet**,
daß der Werkzeughalter (14) unterhalb der Bearbeitungsposition der Werkstücke (7) angeordnet ist und daß die Zu- und Abfuhr von Werkstücken (7) von oberhalb der Bearbeitungsstation her erfolgt.

6. Werkzeugmaschine nach einem der vorhergehenden Ansprüche,
**dadurch gekennzeichnet**,
daß an dem Maschinengestell (101) zwei Bearbeitungsstationen (102, 103) angeordnet sind, denen jeweils ein Werkstück (104) zur Bearbeitung zugeführt wird, wobei die Bearbeitungsstationen (102, 103) jeweils einen an dem Maschinengestell (101) gehaltenen Werkzeughalter (102a, 103a) und eine dem Werkzeughalter (102 a, 103a) zugeordnete, an ihrem einen axialen Ende ein Spannfutter (118) zum Halten eines Werkstückes (104) aufweisende Arbeitsspindel (102b, 103b) umfassen, daß die Arbeitsspindel (102b) der ersten Bearbeitungsstation (102) an einer ersten Führungsschiene (105) und die Arbeitsspindel (103b) der zweiten Bearbeitungsstation (103) an einer parallel zu der ersten Führungsschiene (105) liegenden zweiten Führungsschiene (106) angeordnet ist, und daß die Arbeitsspindeln (102b, 103b) auf voneinander abgewandten Seiten der jeweiligen Führungsschiene (105, 106) angeordnet sind.

7. Werkzeugmaschine nach Anspruch 6,
**dadurch gekennzeichnet**,
daß beiden Arbeitsspindeln ein dem Spannfutter gegenüberliegender Reitstock zugeordnet ist und beide Arbeitsspindeln eine horizontale Spindelachse aufweisen.

8. Werkzeugmaschine nach Anpsruch 6,
**dadurch gekennzeichnet**,
daß die eine Arbeitsspindel (102b) einen zugeordneten Reitstock (115) und eine im wesentlichen horizontale Spindelachse (I) aufweist, während die andere Arbeitsspindel (103b) ohne Reitstock und mit im wesentlichen vertikaler Spindelachse (I) ausgebildet ist.

9. Werkzeugmaschine nach einem der Ansprüche 6 bis 8,
**dadurch gekennzeichnet**,
daß eine Transportvorrichtung (107) vorgesehen ist, um ein Werkstück (104) aus dem Bereich der Werkstückablegeposition der ersten Bearbeitungsstation (102) in den Bereich der Werkstückaufnahmeposition der zweiten Bearbeitungsstation (103) zu transportieren.

## Claims

1. Machine tool, in particular for the turning of workpieces (7) comprising a machining station including a tool holder (14) for machining tools (15), a headstock (2) with a horizontal working spindle (4) for the rotation of a workpiece (7) held thereon, and a tailstock (3) disposed opposite to the working spindle (4) for the additional support of the workpiece (7) held in the headstock (2),
characterized in that
the headstock (2) and the tailstock (3) are made movable between the machining station and a workpiece receiving position, and in that the headstock (2) and the tailstock (3) are arranged as a unit on carriages (1, 8), which are displaceable on guide rails (9, 10) in at least two directions (X, Z) which are in particular perpendicular to one another.

2. Machine tool in accordance with claim 1,
characterized in that
the headstock (2) and the tailstock (3) are additionally movable between the machining station and a workpiece depositing position.

3. Machine tool in accordance with one of the preceding claims,
characterized in that
the path of travel of the headstock (2) and of the tailstock (3) is numerically controlled.

4. Machine tool in accordance with one of the preceding claims,
characterized in that
a transport device is provided for the delivery of workpieces (7) to the workpiece receiving position and in that the supply of workpieces (7) to the workpiece receiving position takes place cyclically.

5. Machine tool in accordance with one of the preceding claims,
characterized in that
the tool holder (14) is arranged beneath the machining position of the workpieces (7), and in that the supply and removal of work-pieces takes place from above the machining station.

6. Machine tool in accordance with one of the preceding claims,
characterized in that
two machining stations (102, 103) are arranged on the machine frame (101), to each of which a respective workpiece (104) is supplied for machining, wherein the machining stations (102, 103) each include a tool holder (102a, 103a) held on the machine frame (101) and a working spindle (102b, 103b) associated with the tool holder (102a, 103a) and having a clamping chuck (118) for holding a work-piece (104) at its one axial end; in that the working spindle (102b) of the first machining station (102) is arranged on a first guide rail (105) and the working spindle (103b) of the second machining station (103) is arranged on a second guide rail (106) lying parallel to the first guide rail (105); and in that the working spindles (102b, 103b) are arranged on sides of the respective guide rail (105, 106), which face away from one another.

7. Machine tool in accordance with claim 6,
characterized in that
a tailstock lying opposite to the clamping chuck is associated with both working spindles, and both working spindles have a horizontal spindle axis.

8. Machine tool in accordance with claim 6,
characterized in that
the one working spindle (102b) has an associated tailstock (115) and a substantially horizontal spindle axis (I), while the other working spindle (103b) is designed without a tailstock and with a substantially vertical spindle axis (I).

9. Machine tool in accordance with one of the claims 6 to 8,
characterized in that
a transport device (107) is provided, in order to transport a workpiece (104) out of the region of the workpiece depositing position of the first machining station (102) into the area of the workpiece receiving position of the second machining station (103).

## Revendications

1. Machine-outil, en particulier pour le tournage de pièces à oeuvrer (7), comprenant une station d'usinage qui comprend un porte-outil (14) pour des outils d'usinage (15), une poupée porte broche (2) avec broche de travail horizontale (4) afin de faire tourner une pièce à oeuvrer (7) portée sur celle-ci, et une contre-pointe (3) opposée à la broche de travail (4) pour assurer un support additionnel de la pièce à oeuvrer (7) tenue dans la poupée porte broche (2),
caractérisée en ce que
la poupée porte broche (2) et la contre-pointe (3) sont réalisées de manière à pouvoir être déplacées entre la station d'usinage et une position de réception de pièces, et en ce que la poupée porte broche (2) et la contre-pointe (3) sont agencées en formant une unité sur des chariots (1, 8) qui sont susceptibles de se déplacer sur des rails de guidage (9, 10) dans au moins deux directions (X, Z), en particulier perpendiculaires l'une à l'autre.

2. Machine-outil selon la revendication 1,
caractérisée en ce que
la poupée porte broche (2) et la contre-pointe (3) sont additionnellement susceptibles de se déplacer entre la station d'usinage et une position de déposition de pièces.

3. Machine-outil selon l'une des revendications précédentes,
caractérisée en ce que
le trajet de déplacement de la poupée porte broche (2) et de la contre-pointe (3) est commandé par voie numérique.

4. Machine-outil selon l'une des revendications précédentes,
caractérisée en ce que
il est prévu un dispositif de transport pour délivrer des pièces à oeuvrer (7) à la position de réception de pièces, et en ce que la fourniture de pièces (7) à la position de réception de pièces a lieu en cadence.

5. Machine-outil selon l'une des revendications précédentes,
caractérisée en ce que
le porte-outil (14) est agencé au-dessous de la position d'usinage des pièces (7), et en ce que l'amenée et l'enlèvement de pièces (7) a lieu depuis le dessus de la station d'usinage.

6. Machine-outil selon l'une des revendications précédentes,
caractérisée en ce que
sur le châssis de machine (101) sont agencées deux stations d'usinage (102, 103), auxquelles sont amenées respectivement une pièce à oeuvrer (104) en vue de l'usinage, les stations d'usinage (102, 103) comprenant respectivement un porte-outil (102a, 103a) tenu sur le châssis de machine (101), et une broche de travail (102b, 103b) associée au porte-outil (102a, 103a), et comportant à l'une de ses extrémités axiales un mandrin de serrage (113) pour tenir une pièce (104),
en ce que la broche de travail (102b) de la première station d'usinage (102) est agencée sur un premier rail de guidage (105) et la broche de travail (103 b) de la deuxième station de travail (103) est agencée sur un deuxième rail de guidage (106) disposé parallèlement au premier rail de guidage (105),
et en ce que les broches de travail (102b, 103b) sont agencées sur des côtés mutuellement détournés du rail de guidage respectif (105, 106).

7. Machine-outil selon la revendication 6,
caractérisée en ce que
une contre-pointe opposée au mandrin de serrage est associée aux deux broches de travail, et en ce que les deux broches de travail présentent un axe de broche horizontal.

8. Machine-outil selon la revendication 6,
caractérisée en ce que
l'une des broches de travail (102b) comporte une contre-pointe associée (115) et un axe de broche (I) sensiblement horizontal, tandis que l'autre broche de travail (103b) est réalisée dépourvue de contre-pointe et avec un axe de broche (I) sensiblement vertical.

9. Machine-outil selon l'une des revendications 6 à 8,
caractérisée en ce que
il est prévu un dispositif de transport (107) afin de transporter une pièce à oeuvrer (104) hors de la région de la position de déposition de pièces de la première station d'usinage (102) jusque dans la région de position de réception de pièces de la deuxième station d'usinage (103).
